# EUROPÄISCHE PATENTSCHRIFT

(11) **EP 2 170 212 B1**
(45) Veröffentlichungstag und Bekanntmachung des Hinweises auf die Patenterteilung: **14.03.2012**
(21) Anmeldenummer: 07763945.8
(22) Anmeldetag: 16.07.2007
(51) Int. Cl.: A61C 8/00

(54) **ZAHNIMPLANTAT**
DENTAL IMPLANT
IMPLANT DENTAIRE

(43) Veröffentlichungstag der Anmeldung: 07.04.2010
(73) Patentinhaber: Dentalpoint Ag, 8048 Zürich (CH)
(72) Erfinder: KÖNIG, Arno, 8044 Zürich (CH)
(74) Vertreter: Rentsch Partner AG
(86) Internationale Anmeldenummer: PCT/CH2007/000342
(87) Internationale Veröffentlichungsnummer: WO 2009/009910

(56) Entgegenhaltungen:
- WO-A-96/26685
- DE-A1- 4 236 978
- DE-A1-102005 013 200
- US-A- 4 645 453
- US-A- 5 030 095
- US-A1- 2004 121 285

## Beschreibung

Die vorliegende Erfindung betrifft ein Zahnersatz-System gemäss Oberbegriff des Patentanspruchs 1.

### FELD DER ERFINDUNG

Unter den Begriffen Zahnimplantat oder Dentalimplantat werden seit Jahren verschiedenste Zahnersatz-Systeme auf dem Markt angeboten und zum Teil sehr erfolgreich eingesetzt. Die Begriffe Zahnimplantat oder Dentalimplantat stehen in der Regel für den Zahnersatz per se und dürfen nicht mit dem eigentlichen Implantatkörper verwechselt werden, der als Zahnwurzelersatz korrekterweise als Implantat bezeichnet wird. Im Folgenden werden die Begriffe Zahnimplantat und Implantatkörper oder Implantat klar getrennt, wobei das Zahnimplantat den Zahnersatz bezeichnet, der den Implantatkörper zur Verankerung im Kieferknochen umfasst. Auf dem Markt herrschen zweiteilige und dreiteilige Zahnimplantate vor, wobei sich die dreiteiligen Zahnimplantate zum Ersatz eines Einzelzahns in der Regel aus einem endossalen Implantat oder Implantatkörper, einem Abutment (auch Verbindungsteil oder Implantatpfosten genannt) und einer Krone, einer Brücke oder einer anderen Prothetik aufbauen. Das Abutment erlaubt es dem Zahnarzt, die Krone gegenüber dem Implantat auszurichten, so dass ihre genaue Stellung im Zahnbogen nicht allein von der Lage des Implantatkörpers abhängig ist. Die Lage und die Position des Implantates wird oft von der jeweiligen anatomischen Situation im Kiefer des Patienten bestimmt. Durch entsprechend geformte oder justierbare Abutments oder das Bearbeiten des Abutment nach dem Einsetzen lässt sich die Stellung der Krone korrigieren.

Die Auswahl der Materialien für das Implantat ist durch höchste Anforderungen an die Biokompatibilität sowie dessen mechanischer Eigenschaften stark eingeschränkt. In den letzten **BESTÄTIGUNGSKOPIE** Jahrzehnten hat sich vor allem Titan als bevorzugtes Material durchgesetzt, da es ein dem Kieferknochen ähnliches e-Modul hat und ausgezeichnet biokompatibel ist.

Ein Nachteil der Implantate und Abutments aus Titan besteht jedoch in ihrer dunklen Färbung. Bei einem Rückzug des Zahnfleisches und des Knochens kann es vor allem im Frontzahnbereich zum Sichtbarwerden oder Durchschimmern der dunklen Metallteile kommen, was aus kosmetischen Gründen äusserst unerwünscht ist. Als alternatives Material haben daher in den letzten Jahren Keramiken, z.B. Zirkonoxid-Keramik, verstärkt Beachtung gewonnen. Kritiker bringen vor, dass Implantate aus Zirkonoxid-Keramik wegen ihres hohen E-Moduls zu Frakturen der Implantatkörper in der Tiefe führen und dass ihr im Vergleich zum Titan geringerer Osseointegrationsgrad zu umfangreichen knochenauflösenden Entzündungen führen kann. Zahnimplantate aus Titan stehen wiederum in der Diskussion, durch Metallintoxikation negative Reaktionen auszulösen.

Gebräuchliche Implantatformen umfassen Blatt-, Nadel-, Schrauben-, Zylinder- und konische Implantate, die jeweils bei unterschiedlichen Indikationen zum Einsatz kommen. Diese bestimmen sich über das Knochenangebot, die Knochenqualität und das erstrebte Funktionsziel. Grundsätzlich können subperiostale und enossale Implantate eingesetzt werden, wobei derzeit in der Praxis fast ausschliesslich enossale Implantate von den Typen Blattsysteme, Schrauben- oder Zylindersysteme zur Anwendung kommen. Häufig verwendete enossale Implantate sind im Wesentlichen zylindrisch aufgebaut und werden in eine Bohrung im Kieferknochen oder direkt in den Kieferknochen eingeschraubt oder eingeschlagen. Am koronalen Ende sind die Implantate mit einer offenen Blindbohrung zur Aufnahme des Abutment versehen. Da das Abutment zur Aufnahme der Krone oder einer Brücke durch das Zahnfleisch hindurch in die Mundhöhle ragt, und nicht vollständig von diesem umschlossen ist, werden solche Zahnimplantate als halboffen bezeichnet. Bei den halboffenen Zahnimplantaten wird die Krone, meist aus herkömmlicher Zahnkeramik und/oder Metall, auf das Abutment oder die einteilige Implantat-/Abutmentkonstruktion geklebt oder zementiert oder mittels mechanischer Mittel daran befestigt. Bei geschlossenen, subgingivalen System, wird das Implantat hingegen bis auf Knochenkammhöhe versenkt und die Mukoperiostdecke wird über dem Implantat vernäht. Nach dem Einheilen ist eine zweite Operation nötig, um das Abutment und darauf die gewünschte Brücke, Krone oder andere Prothetik anbringen zu können. Ein Nachteil aller Systeme, bei denen die Prothetik auf das Abutment geklebt wird, besteht darin, dass sich Klebstoff- oder Zementreste, die beim Aufkleben im Übergangsbereich zwischen Krone und Abutment und/oder Implantat austreten, nur schlecht entfernen lassen.

Ein zweiteiliges offenes, transgingivales System wird vom Institut-Straumann AG, Waldenburg/Schweiz unter der Bezeichnung ITI DENTAL IMPLANT SYSTEM angeboten. Sowohl das Verankerungsteil oder Implantat, das transgingival implantiert wird, als auch die zugehörigen Aufbauteile bestehen hierbei aus reinem Titan. Aus der EP 0879024 B1 ist ein ähnliches System bekannt, bei dem ein massives konisches Abutment in das Implantat eingeschraubt wird. Die Aufnahmeöffnung des Implantates ist entsprechend ebenfalls konisch geformt. Eine derartige konische Form ist bei Zahnärzten beliebt, da sie die Implantation, insbesondere auch das Nehmen der Abdrücke und Herstellen der Mastermodelle vereinfacht Die konische Implantat-AbutmentVerbindung stellt hohe Anforderungen an die Passgenauigkeit der Bauteile, da sie sowohl kraft- wie auch formschlüssig ist Derzeit lassen sich solche Konusverbindungen nur bei Titanimplantaten mit ausreichend kongruenten Konusflächen realisieren, um akzeptable Versagensraten zu erreichen.

Da von den Dentalimplantaten beim Kauen erhebliche Wechsellasten aufgenommen werden müssen, führt schon die geringste Mikrobeweglichkeit zwischen den verschraubten Bauteilen zu Abrasion und Verschleiss.

Es ist bekannt, dass die zweiteiligen Systeme aus Implantat mit Abutment eine gute Anpassung an die geometrischen Verhältnisse bei verschiedenen Indikationen erlauben. Da jedoch die Vielzahl der beteiligten Komponenten grundsätzlich als nachteilig für die mechanische Stabilität des Gesamtsystems eingeschätzt wird und da jede weitere Verbindung mögliche Ansatzpunkte für Parodontitis oder Gingivitis durch Spaltbildung darstellt, wird in der DE 10159683 ebenfalls von der Anmelderin Straumann ein einteiliges Dentalimplantat aus einer Zirkonoxidkeramik, wie sie aus der US 6,165,925 bekannt ist, vorgeschlagen. Das Implantat zur Verankerung im Knochen und das Abutment zur Aufnahme einer zu applizierenden Krone oder Brücke bestehen aus einem Werkstoff auf Zirkonoxidbasis, bei dem durch eine spezielle Oberflächenbehandlung mit einer maximalen Rauhtiefe im Bereich des Verankerungsteils im Bereich zwischen 4 und 20 µm eine gute Osteointegration erreicht wird. Der einteilige Implantatkörper mit angeformtem Abutment weist ein Verankerungsteil mit einem Gewindeabschnitt und einem abgerundeten unteren Ende zum Eindrehen in den Kieferknochen auf. Das Verankerungsteil geht in einer bevorzugten Ausführungsform an seinem oberen Ende über einen leicht aussenkonisch nach aussen aufgeweiteten Abschnitt in ein einstückig damit ausgebildetes Aufbauteil auf, das in der Verlängerung der Längsachse des Gewindeabschnitts verläuft. Das Aufbauteil besitzt eine kegelstumpfförmige oder konische Form und ist an einer Seite mit einer Abflachung versehen. An der der Abflachung gegenüberliegenden Seite ist eine in axialer Richtung verlaufende Rille in die Aussenoberfläche eingeformt, die von der oberen Stirnfläche des Aufbauteils aus nach unten verläuft und in einem konischen Abschnitt endet, der den Anschluss an den Konusabschnitt des Verankerungsteils bildet. Die Abflachung dient in Verbindung mit der gegenüberliegenden Rille zum formschlüssigen Ansatz eines Schraubwerkzeuges, das eine entsprechend angepasste Steckaufnahme aufweist. Ein Nachteil dieses Systems besteht darin, dass zumindest das Abutment nach dem Einsetzen im Mund des Patienten nachbearbeitet werden muss.

Aus der WO 2006/084346A1 der Firma Medin Tech ist ein Implantatsystem mit einem Abutment aus einem nicht-metallischen Material bekannt, das ein Implantat und einen Prothesenträger umfasst, der wiederum ein Abutment und ein Kragenelement umfasst. Wesentliche Merkmale des Implantatsystems sind, dass die Teile des Implantatsystems linear ineinander geschoben und untereinander verklebt werden. Das Abutment weist zwischen einem im Wesentlichen zylindrischen Basalpfosten und einem Kopfteil einen zylindrischen Halsteil mit einem unteren Vorsprung auf, welcher als Vieleck ausgeführt wird und der radialen Positionierung des Abutments in einer korrespondierenden Aufnahme in der Schulter des Implantats dient Als bevorzugt werden drei-, fünf- oder siebeneckige Vorsprünge beschrieben, die mit entsprechenden drei-, fünf- oder siebeneckigen Aufnahmen in der Implantatschulter zusammenwirken und die Positionierung des Abutments in drei, fünf oder sieben verschiedenen radialen Winkelpositionen um die Längsachse des Implantats ermöglichen. Die zentrale Bohrung im Implantat zur Aufnahme des Basalpfostens ist mit einem Innengewinde versehen, das das Einschrauben einer Schraubkappe oder eines Platzhalters während des Abheilprozesses ermöglicht. Nach dem Abheilen wird ein Kragenelement über den Halsbereich des Abutments gestülpt und der Basalpfosten in die Gewindebohrung des Implantates eingeklebt Das zwischen Implantat und Abutment angeordnete Kragenelement muss einen wesentlichen Anteil der beim Kauen eingeleiteten Kräfte aufnehmen und stellt mit seiner konvexen Aussenfläche die Kontaktfläche zum umgebenden Zahnfleisch dar. Im Abutment ist ein zentraler durchgehender axialer Kanal zum Abfliessen des Klebstoffes angebracht. In der WO 2006/084346 A1 werden eine ganze Reihe von keramischen und Komposit- Materialien aufgelistet, die sich zur Herstellung des Abutments eignen. Ein Nachteil dieses Systems liegt im grossen technischen Aufwand zur Herstellung des zentralen Axialkanals im Abutment und den mechanischen Belastungen und Spannungen, welchen das Abutment dadurch ausgesetzt ist. Das Abutment bzw. das Positionierungselement des Abutments muss entsprechend entweder aus einem Material sein, welches hohen mechanischen Beanstandungen standhält oder, wie vorangehend ausgeführt, entsprechend dimensioniert sein. Ein weiterer Nachteil besteht darin, dass das Implantat nicht aus Keramikmaterial hergestellt werden kann, so dass ein reines Keramiksystem aus Keramikimplantat und Keramikabutment gemäss der Erfindung der WO 2006/084346 A1 nicht realisierbar ist.

Aus der EP 1728486 A1 der Firma Straumann ist ein Implantatsystem mit einem Implantat und einem Abutment bekannt, bei dem das Abutment mit Mitteln zur rotationsgesperrten Halterung des Abutment im Implantat versehen ist. Eine Aufnahmeöffnung im Implantat ist derart ausgeführt, dass das Abutment mit einem basalen Anteil im Wesentlichen formschlüssig in die Aufnahmeöffnung in der gewünschten Winkelposition in das Implantat eingesteckt werden kann und in dieser Position durch eine separate Schraube am Implantat befestigt wird. Das Abutment ist zur Aufnahme der Schraube mit einer zentralen durchgehenden Bohrung versehen, so dass der basale Bereich sehr dünnwandig ausgebildet sein muss. Die Mittel, die die Verdrehung von Abutment und Implantat gegeneinander verhindern, bestehen wiederum aus einem polygonalen Anti-Rotations-Element am Abutment und einer Aufnahme, die die korrespondierende Form zum Anti-Rotations-Element aufweist. Das System der EP 1728486 A1 lässt eine Fertigung des Implantats und des Abutments aus Keramik mit den bekannten Herstellungsverfahren und -Techniken zu vertretbaren Kosten nicht zu.

Trotz der Vielzahl von bekannten Systemen für den Ersatz von einzelnen Zähnen, die Versorgung von grösseren Zahnlücken oder von verkürzten Zahnreihen und zur Befestigung von Brücken oder Prothesen besteht bei den Anwendern steigender Bedarf an Systemen, die die Nachteile der bekannten Systeme vermeiden.

### HINTERGRUND DER ERFINDUNG

Der Erfindung liegt die Aufgabe zu Grunde, ein gattungsgemässes ZahnersatzSystem zur Verfügung zu stellen, das die oben genannten Nachteile nicht aufweist. Es ist eine weitere Aufgabe, ein ZahnersatzSystem, umfassend ein Implantat und ein Abutment, zur Verfügung zu stellen, das eine optimierte Krafteinleitung vom Abutment in das Implantat sicherstellt. Ausserdem sollen die erfindungsgemässen Zahnersatz-Systeme volle Freiheit bei der Materialwahl in der Herstellung und bei der Kombination von Abutments und Implantaten aus Metall und/oder Keramik erlauben. Sie sollen einfach und kostengünstig sein und das Zahnersatz-System soll höchsten Anforderungen an Stabilität, Qualität und Lebensdauer gerecht werden.

Diese Aufgabe wird durch ein ZahnersatzSystem mit den Merkmalen des Anspruchs 1 erfüllt.

Ein wesentlicher Vorteil der vorliegenden Erfindung besteht darin, dass sie sich praktisch bei allen Zahnersatz-Systemen realisieren lässt, bei denen die Krone, Brücke oder eine andere Prothetik auf Implantat und/oder Abutment aufgeklebt oder zementiert wird. Im Folgenden soll der Begriff Krone, sofern nicht ausdrücklich etwas anderes erwähnt ist, auch Brücken und alle anderen Formen von Prothesen umfassen. Der Begriff Kleben soll, sofern nicht ausdrücklich etwas anderes erwähnt ist, alle bekannten stoffschlüssigen Fügeverfahren, das heisst Verfahren bei denen eine adhäsive Verbindung zwischen den zu verbindenden Baugruppen herzustellen ist, umfassen und entsprechend soll der Begriff Kleber alle in der Zahnmedizin bekannten Zusammensetzungen zum stoffschlüssigen Fügen umfassen.

Bei den erfindungsgemässen Zahnersatz-Systemen wird das Abutment vorzugsweise in der Aufnahmeöffnung eingeklebt. Um das Abutment nicht durch eine zentrale Abflussbohrung, wie sie aus dem Stand der Technik bekannt ist, schwächen zu müssen, wird gemäss bevorzugter Ausführungsformen der zylindrische Abutmentstamm mit mindestens einem peripheren Drainagekanal zur Klebstoffdrainage versehen. Der mindestens eine Drainagekanal erstreckt sich über die gesamte Höhe des zylindrischen Abutmentstamms und kann in weiteren Ausführungsformen durch einen zusammenpassenden Kanal in der zylindrischen Innenwand des Implantates ergänzt oder von diesem ersetzt werden.

Bei einer bevorzugten Ausführungsform des erfindungsgemässen Zahnersatz-Systemes, ist die Übertragung aller einwirkenden Kräfte zwischen Abutment und Implantat auf zwei klar bestimmte Bereiche begrenzt. Diese beiden Bereiche sind vorzugsweise ein zylindrischer Bereich mit axialer Ausdehnung an einem proximalen Abutmentstamm, der in eine korrespondierende zylindrische Aufnahmeöffnung im Implantat einpassbar ist, und eine vorzugsweise senkrecht zur Längsachse angeordnete Basalfläche am proximalen Ende des Abutments, die bei eingesetztem Abutment Grundfläche in der Aufnahmeöffnung aufliegt. Während die zylindrische Wirkverbindung primär die Scherkräfte aufnimmt, nimmt die plane Wirkverbindung primär die axial wirkenden Kräfte auf. Die relativ einfache Geometrie der Passungen erleichtert das Einhalten kleinster Toleranzen bei der Herstellung insbesondere auch im Keramikbereich.

Es hat sich als vorteilhaft erwiesen, Implantat und Abutment derart auszubilden, dass bei eingeführtem Abutment der Kopfbereich des Abutments von einer distalen Schulterfläche des Implantats beabstandet ist, so dass die Kraftübertragung klar auf die beiden vorgenannten Bereiche beschränkt ist.

Ein weiterer Vorteil der vorliegenden Erfindung liegt darin, dass sie sich nicht nur bei herkömmlichen Implantaten, sondern auch bei Implantaten realisieren lässt, die gemäss dem Konzept des Platform Switching aufgebaut sind. Hierbei wird eine Erhaltung des crestalen Knochens durch eine gezielte Kombination eines kleineren Abutmentdurchmessers mit einer größeren Implantatplattform angestrebt

In bevorzugten Ausführungsformen der erfindungsgemässen Zahnersatzsysteme wird durch das formschlüssige Zusammenwirken von Arretiermitteln an Abutment und Implantat eine zuverlässige Positionierung mit anschliessender Blockierung des Abutments in einer von einer Mehrzahl von vorgegebenen diskreten Winkelstellungen erreicht. Die drehmomentschlüssige Verbindung im Bereich der proximalen Abutmentbasis und mindestens einer Innenwand eines proximalen Abschnittes der Aufnahmeöffnung stellt sicher, dass sich das Implantat gemäss bevorzugter Ausführungsformen in mindestens zwei diskreten radialen Winkelstellungen positionieren lässt.

Ohne vom Grundgedanken der vorliegenden Erfindung lassen sich auch solche Zahnersatz-Systeme realisieren, bei denen Abutment und/oder Implantat keine Arretiermittel aufweisen, so dass das Abutment auch im eingesetzten Zustand um die Längsachse drehbar und nicht rotationsgesperrt ist

### KURZBESCHREIBUNG DER FIGUREN

Anhand von Figuren, welche lediglich Ausführungsbeispiele darstellen, wird die Erfindung im Folgenden erläutert. Es zeigen
- Fig. 1: ein Implantat eines Zahnersatz-Systems gemäss einer ersten Ausführungsform der Erfindung im sektoriellen Längsschnitt entlang der Zentralachse mit eingesetztem Abutment, bei dem die Krone weggelassen ist;
- Fig. 2: eine Detailvergrösserung der Figur eines weiteren Zahnersatz-Systems gemäss der Erfindung im sektoriellen Längsschnitt entlang der Zentralachse im Bereich der Wirkverbindung zwischen eingesetztem Abutment und Implantat;
- Fig. 3a: eine Seitenansicht auf ein Abutment gemäss Figur 1, wobei das Abutment gegenüber der Ansicht der Figur 1 um 60° im Uhrzeigersinn gedreht dargestellt ist;
- Fig. 3b: das Abutment gemäss Figur 3a in einer Schrägansicht von Proximal;
- Fig. 3c: das Implantat gemäss Figur 1 in einer Sicht von Distal in die Aufnahmeöffnung;
- Fig. 4a: eine Seitenansicht auf ein Abutment gemäss einer weiteren Ausführungsform der Erfindung;
- Fig. 4b: das Abutment gemäss Figur 4a in einer Schrägansicht von Proximal;
- Fig. 4c: ein zur Aufnahme des Abutments gemäss Fig. 4a und Fig. 4b geeignetes Implantat in einer Sicht von Distal in die Aufnahmeöffnung;
- Fig. 5a: eine Seitenansicht auf ein Abutment gemäss Figur 2, wobei das Abutment gegenüber der Ansicht der Figur 2 um etwa 60° im Uhrzeigersinn gedreht dargestellt ist;
- Fig. 5b: das Abutment gemäss Figur 5a in einer Schrägansicht von Proximal;
- Fig. 5c: das Implantat gemäss Figur 2 in einer Sicht von Distal in die Aufnahmeöffnung.

### DETAILLIERTE BESCHREIBUNG BEVORZUGTER AUSFÜHRUNGSFORMEN

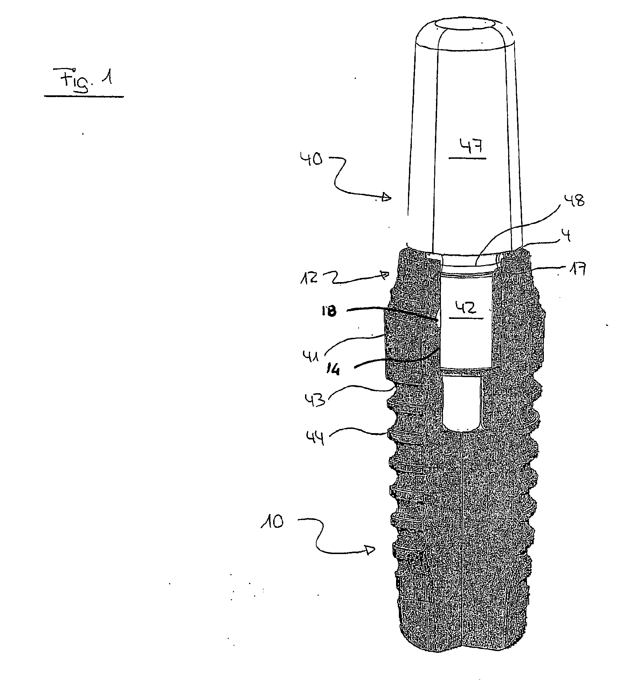

In der Figur 1 ist ein ZahnersatzSystem 1 mit einem teilweise geschnittenen Implantat 10 dargestellt, so dass die Sicht auf ein Abutment 40 mit einem zylindrischen Abutmentstamm 41 freigegeben ist, der in einer korrespondierenden zylindrischen Aufnahmeöffnung 11 im Implantat 10 eingepasst ist. Der Abutmentstamm 41 weist eine zylindrische äussere Mantelfläche 42 auf, die passgenau mit einem Spiel von maximal 30 µm vorzugsweise 10 µm mit einer Toleranz von +/- 5 µm zur zylindrischen Aufnahmeöffnung 11 gefertigt ist. In einem proximalen Bereich 43 verjüngt sich der Abutmentstamm 41 und geht im dargestellten Ausführungsbeispiel in einen Aussensechskant 44 über. Auf die Funktion des Aussensechskant 44 als Arretiermittel zur Verdrehsicherung oder Rotationssperrung wird im Folgenden noch genauer eingegangen werden.

Zur Aufnahme des Abutments 40 ist das Implantat 10 in allen dargestellten Ausführungsbeispielen am koronalen Ende 12 mit der Aufnahmeöffnung 11 in Form einer zylindrischen Blindbohrung versehen, die unterseitig koaxial in einem Innensechskant 13 mündet. Im dargestellten zusammengebauten Zustand greift der korrespondierende Aussensechskant 44 des Abutments als Verdrehsicherung in den Innensechskant 13 ein.

Das Abutment 40 wird in das Implantat 10 eingeklebt, so dass eine kraft- und formschlüssige Verbindung zwischen dem zylindrischen Bereich 42 des Abutment 40 und dem korrespondierenden zylindrischen Passsitz 14 der Aufnahmeöffnung im Implantat hergestellt ist. Die zylindrische Implantat-Abutment-Verbindung, die Scherkräfte in äusserst vorteilhafter Weise aufnehmen kann, wird ergänzt durch die kraftschlüssige Auflage einer proximalen Grundfläche 45 des Abutmentstammes 41 auf dem Grund 15 des Innensechskants 13 und damit der Aufnahmeöffnung 11, die die Axialbewegung des Abutments nach unten begrenzt. Über diese kraftschlüssige Auflage werden im eingesetzten Zustand primär die auf das Abutment 40 wirkenden Axialkräfte in das Implantat 10 eingeleitet.

Das koronale Ende 12 des Implantates 10 ist von einer annähernd waagerechten Ringfläche 16, die die Aufnahmeöffnung 11 umgibt, gebildet. Zwischen dieser Ringfläche 16 und einem proximalen Flansch 46 im Übergangsbereich zwischen Abutmentstamm 41 und Kopfbereich 47 des Abutments 40 ist bei eingepasstem Abutment 40 ein Ringspalt 4 ausgebildet. Dadurch wird verhindert, dass der Kopf 47 des Abutments 40 auf der oberen Ringfläche 16 des Implantats 10 zu liegen kommt und es ist sichergestellt, dass die Krafteinleitung vom Abutment 40 in das Implantat 10 nur über den Passzylinder 42 im Stammbereich 41 und der Basalfläche 45 erfolgt.

Aus der Figur, die das Abutment 40 gemäss der Figur 1 in einer um etwa 60° gedrehten Ansicht zeigt, ist ersichtlich, dass zwischen dem im Wesentlichen zylindrischen Abutmentstamm 41 und dem Kopf 47 des Abutments 40 ein leicht eingeschnittener Halsbereich 48 vorgesehen ist. Beim eingepassten Abutment 40 kommt eine innere Kante 17 zwischen distaler Ringfläche 16 und der zylindrischen Aufnahme 14 gerade auf Höhe der umlaufenden Einschnürung im Halsbereich 48 zu liegen, so dass die Kante 17 gegenüber dem Abutment 40 freigestellt ist und auch bei Belastung des Abutments 40 geschont bleibt.

Die axiale Dimensionierung der einzelnen zusammenwirkenden Anteile 14 und 42, 15 und 45 des Abutments 40 und des Implantates 10 sind derart aufeinander abgestimmt, dass bei vollständig eingeführtem Abutment der Ringspalt 4 zwischen Abutmentkopf 47 und distaler Ringfläche 16 des Implantats mindestens 10 µm, vorzugsweise zwischen 10 und 50 µm, besonders bevorzugt 20 µm beträgt. Die Höhe Hv der Verdrehsicherung ist, wie aus der Figur 1 ersichtlich ist, grösser als die Tiefe des korrespondierenden Innensechskants 13 im Implantat, so dass der Passzylinder 42 auf dem Abutmentstamm 41 in seinem proximalen Endbereich gegenüber dem Innensechskant 13 sicher abgesetzt ist und es hier zu keinem unerwünschten Kontakt und Belastungen mit axialen Kraftkomponenten entstehen kann.

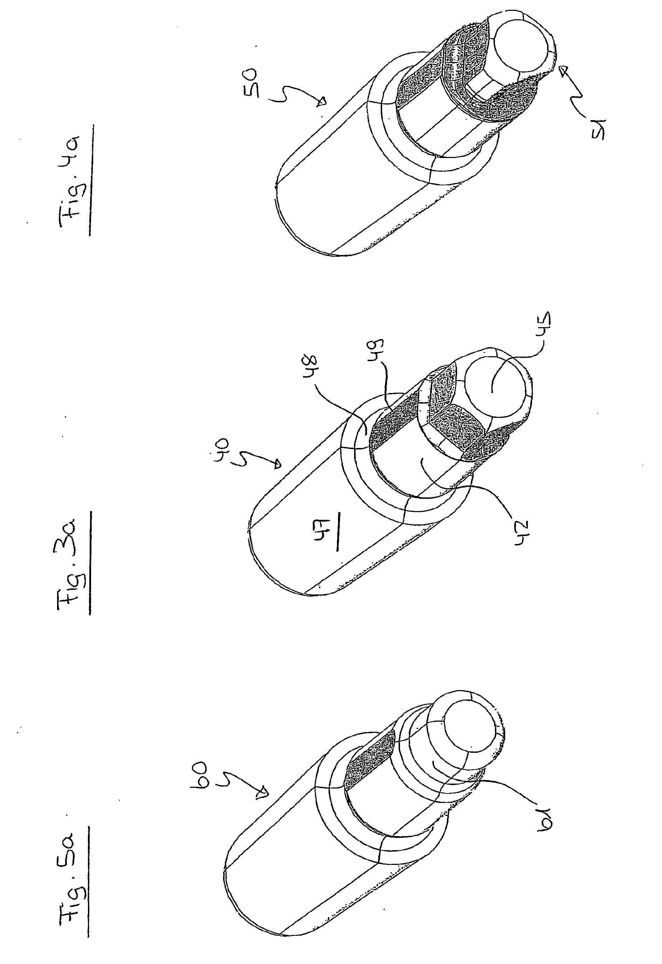

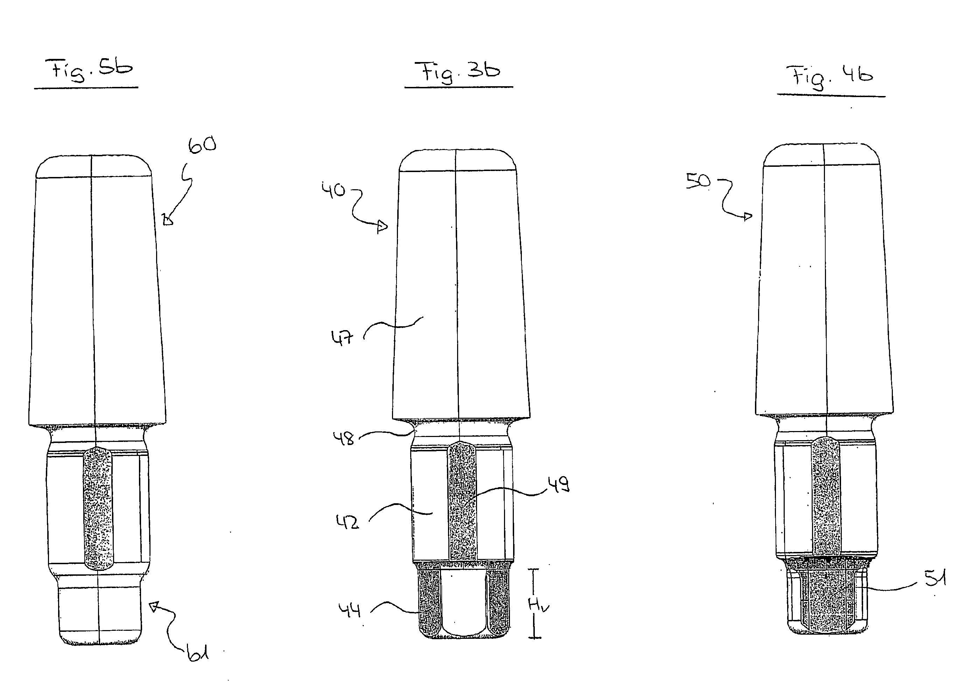

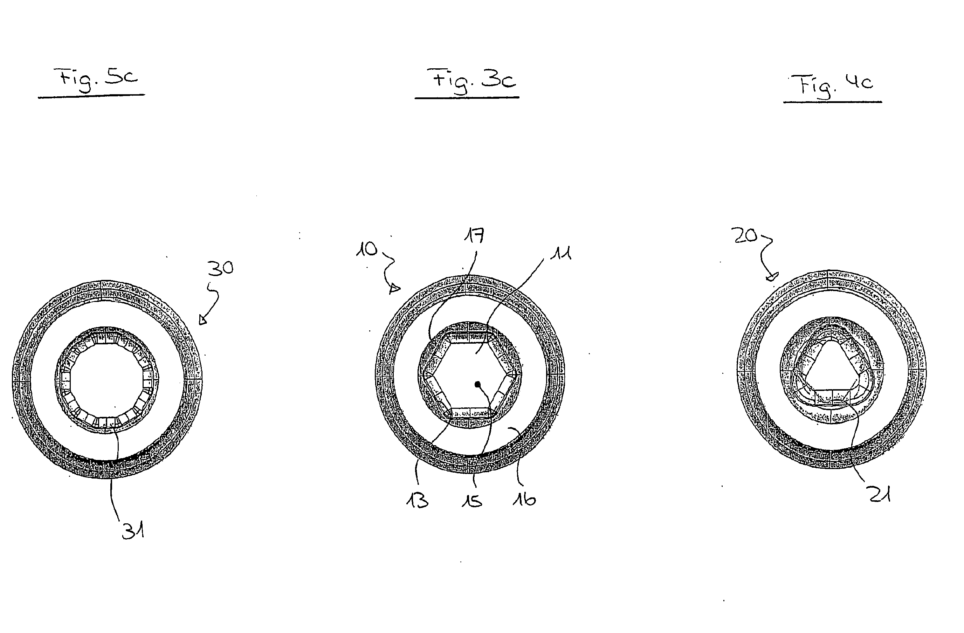

Aus den Ansichten der Figuren 1 und 3 ist zudem ersichtlich, dass der zylindrische Abutmentstamm zumindest im Bereich der zylindrischen ImplantatAbutmentVerbindung 14, 42 zumindest einen Drainagekanal 49 aufweist, der sich an der Aussenseite in axialer Richtung über die gesamte Höhe des Passzylinders 42 erstreckt. Der mindestens eine Drainagekanal 49 stellt beim Einkleben des Abutments 40 in das Implantat 10 den unbehinderten Abfluss des überschüssigen Klebstoffes aus der Implantatöffnung 11 sicher. Im dargestellten Ausführungsbeispiel ist der Drainagekanal durch eine einfache tangentiale Abflachung des Passzylinders 42 gebildet. Beim axialen Einführen des Abutments in die mit Klebstoff gefüllte Aufnahmeöffnung bildet sich durch das Zusammenwirken des Drainagekanals mit der benachbarten Innenwand des Passsitzes 14 der funktionelle, im Querschnitt kreissektorförmige, Abflusskanal aus. Der mindestens eine Drainagekanal ist zwischen 10 µm und 250 µm tief, vorzugsweise zwischen 50 und 150 µm tief, wobei eine funktionale Querschnittsfläche des Drainagekanals vorzugsweise zwischen 1 und 10 % bezogen auf die Querschnittsfläche des Abutmentstammes, vorzugsweise von 2 % erzielt wird. Es ist für den Fachmann nachvollziehbar, dass die Dimensionierung des Drainagekanals nicht auf diese bevorzugten Werte eingeschränkt sein muss, sondern im Zusammenwirken der verschiedener Faktoren wie Dimensionierung des Abutments, Materialwahl, Stabilität und anderen optimiert werden kann.

Die ebenso einfache wie wirkungsvolle Gestaltung des Drainagekanals erlaubt es, auf zentrale Kanäle im Inneren des Abutments zu verzichten, was sich sowohl positiv auf die Stabilität wie auch auf den Herstellungsaufwand und die Herstellungskosten auswirkt.

In der Figur 1 ist eine umlaufende Ringnut 18 im zylindrischen Passsitz 14 der Aufnahmeöffnung 11 dargestellt, die sich zum Beispiel zur klemmenden lösbaren Befestigung von Einheilkappen aus Kunststoff als äusserst vorteilhaft erwiesen hat.

Anhand des Ausführungsbeispiels der Figur 4 soll noch auf eine weitere vorteilhafte Ausführungsform 2 eingegangen werden, bei der das eingesetzte Abutment 20 durch das formschlüssige Zusammenwirken von im Querschnitt im Wesentlichen regelmässig dreiseitig geformten Arretiermitteln 21, 51 verdrehsicher im Implantat 20 gesperrt wird.

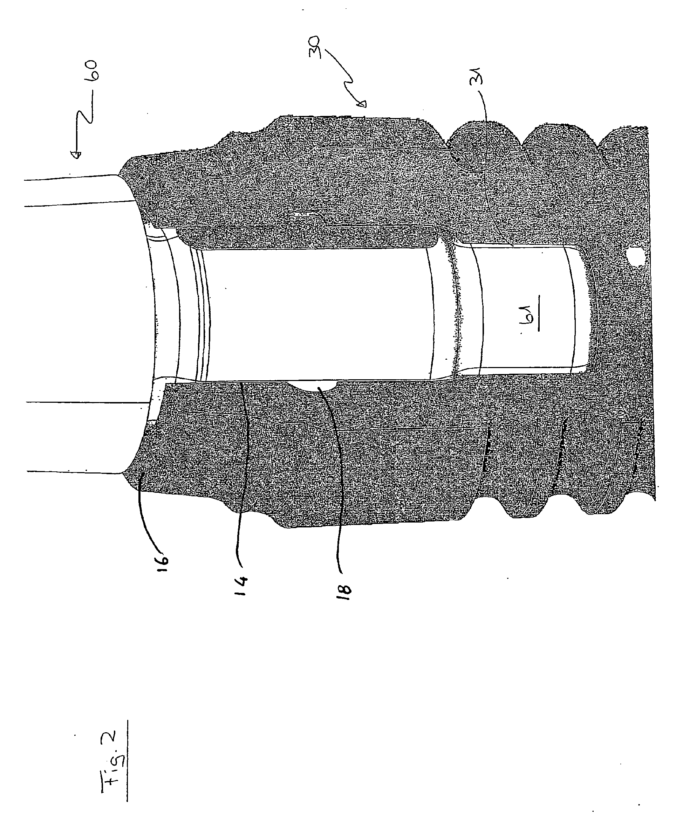

In der Ausführungsform der Figuren 2 und 5 ist ein Abutment 60 gezeigt, das keine Arretiermittel an der proximalen Abutmentbasis 61 aufweist, sondern kreiszylindrisch ausgebildet ist. In der Aufnahmeöffnung mit einem zwölfeckigen proximalen Abschnitt 31 des Implantates 30 ist das Abutment 60 daher frei drehbar.

Vorzugsweise sind die erfindungsgemässen Zahnersatz-Systeme in mindestens zwei radialen Winkelstellungen positionierbar. Die polygonalen Arretiermittel im proximalen Bereich der Aufnahmeöffnungen der Implantate dienen einerseits als Hilfsmittel zur Radialpositionierung und der rotationsgesperrten Halterung des Abutments im Implantat, beim Einschrauben des Implantats dienen sie zur drehmomentschlüssigen Aufnahme des Schraubwerkzeuges. Die Positionierung unmittelbar über dem massiven mit einem Aussengewinde versehenen Proximalteil des Implantats lässt eine optimale Kraftübertragung bei minimaler Torsionsbelastung dünnwandiger Implantatbereiche beim Eindrehen in den Kieferknochen zu.

Für den Fachmann ist es anhand der vorliegenden Offenbarung einfach nachvollziehbar, dass die erfindungsgemässen Zahnersatz-Systeme eine maximale Auswahlfreiheit bei der Materialauswahl zulassen. Es lassen sich sowohl die Implantate wie auch die Abutments aus Titan oder Keramik fertigen und beide Bauteile können in allen möglichen Materialkombinationen zum Einsatz kommen. Erstmals wird dadurch der Einsatz, respektive das Einkleben von keramischen Abutments in Implantate aus Titanoxid oder anderen metallischen Werkstoffen ermöglicht.

Gerade die Vorteile bei der Herstellung treten aber besonders bei Implantaten und Abutments aus Keramik zu Tage. Als keramische Herstellungsmaterialien haben sich dabei bekannte Zirkonoxid oder Zirkonoxid/Aluminium-Mischungen besonders bewährt.

Obwohl in den dargestellten Ausführungsbeispielen nur axialsymmetrische Abutments dargestellt sind, lässt sich die erfindungsgemässe Lehre auch auf Abutments mit gegenüber dem Stamm abgewinkeltem Kopf anwenden. Gleiches gilt für die leicht konische Form des Abutmentkopfes, der durchaus, bevorzugt bei keramischen Abutments, auch als Zylinder zum individuellen Nachbearbeiten ausgebildet sein kann.

Die efindungsgemässe Verbindung zwischen Implantat und Abutment verhindert, dass, wie bei vorbekannten Abutments, die im Implantat verschraubt werden, das Risiko besteht, dass Spannungen im System und/oder Schraubenbrüche durch Überlastungen entstehen.

### LISTE DER BEZUGSZAHLEN

- Zahnersatz-System: 1, 2, 3
- Ringspalt: 4
- Implantat: 10, 20, 30
- Aufnahmeöffnung: 11, 21, 31
- koronales Ende: 12
- Innensechskant: 13
- Passsitz: 14
- Grund: 15
- Ringfläche: 16
- Innenkante: 17
- Ringnut: 18
- Abutment: 40, 50, 60
- Abutmentstamm: 41, 51, 61
- Passzylinder: 42
- Verjüngung: 43
- Aussensechskant: 44
- Grundfläche: 45
- Flansch: 46
- Kopf: 47
- Hals: 48
- Drainagekanal: 49

## Patentansprüche

1. Zahnersatz-System (1, 2, 3) umfassend ein Implantat (10, 20, 30) zur Osteointegration in einen Kieferknochen und ein Abutment (40, 50, 60), wobei ein Abutmentstamm (41, 51, 61) umfassend einen Passzylinder (42) in einem korrespondierenden zylindrischen Passsitz (14) einer Aufnahmeöffnung (11, 21, 31) im Implantat (10, 20, 30) einpassbar ist ,wobei das Abutment (40, 50, 60) in der Aufnahmeöffnung (11, 21, 31) einklebbar ist, **dadurch gekennzeichnet, dass** der zylindrische Abutmentstamm (41, 51, 61) mit einem peripheren Drainagekanal (49) zur Klebstoffdrainage beim Einkleben des Abutments (40, 50, 60) in das Implantat (10, 20, 30) versehen ist,

2. Zahnersatz-System (1, 2, 3) nach Anspruch 1, **dadurch gekennzeichnet, dass** bei eingeführtem Abutment (40, 50, 60) der Abutmentstamm (41, 51, 61) mit einer Basalfläche auf einer Grundfläche (45) in der Aufnahmeöffnung (11, 21, 31) aufliegt

3. Zahnersatz-System (1, 2, 3) nach einem der Ansprüche 1 bis 2, **dadurch gekennzeichnet, dass** bei eingeführtem Abutment (40, 50, 60) der Kopfbereich des Abutments von einer distalen Schulterfläche des Implantats (10, 20, 30) beabstandet ist.

4. Zahnersatz-System (1, 2, 3) nach Anspruch 1, **dadurch gekennzeichnet, dass** der Drainagekanal (49) durch eine Abflachung des Abutmentstammes (41, 51, 61) gebildet ist

5. Zahnersatz-System (1, 2, 3) nach Anspruch 4, **dadurch gekennzeichnet, dass** der Drainagekanal (49) einen kreissektoriellen Querschnitt aufweist, der zwischen 10 µm und 250 µm, vorzugsweise zwischen 50 und 150 µm tief ist.

6. Zahnersatz-System (1, 2, 3) nach einem der Ansprüche 1 bis 4 **dadurch gekennzeichnet, dass** das Implantat (10, 20, 30) und/oder Abutment (40, 50, 60) aus Titan oder Keramik gefertigt sind. 6

7. Zahnersatz-System (1, 2, 3) nach Anspruch 6, **dadurch gekennzeichnet, dass** das keramische Implantat (10, 20, 30) und/oder das keramische Abutment (40, 50, 60) aus Zirkonoxid oder einer Zirkonoxid/Aluminium-Mischung gefertigt sind.

8. Zahnersatz-System (1, 2, 3) nach einem der vorhergehenden Ansprüche, **dadurch gekennzeichnet, dass** das eingesetzte Abutment (40, 50, 60) durch das formschlüssige Zusammenwirken von Arretiermitteln an einer proximalen Abutmentbasis und mindestens einer Innenwand des proximalen Abschnittes der Aufnahmeöffnung (11, 21, 31) in mindestens zwei radialen Winkelstellungen positionierbar ist.

## Claims

1. Tooth replacement system (1, 2, 3) comprising an implant (10, 20, 30), for osseointegration in a jaw bone, and an abutment (40, 50, 60), an abutment stem (41, 51, 61) comprising a close-fit cylinder (42) being able to be fitted in a corresponding cylindrical close-fit seat (14) of a receiving opening (11, 21, 31) in the implant (10, 20, 30), the abutment (40, 50, 60) being able to be adhesively bonded in the receiving opening (11, 21, 31), **characterized in that** the cylindrical abutment stem (41, 51, 61) is provided with a peripheral drainage channel (49) for drainage of adhesive when the abutment (40, 50, 60) is adhesively bonded into the implant (10, 20, 30).

2. Tooth replacement system (1, 2, 3) according to Claim 1, **characterized in that**, when the abutment (40, 50, 60) is inserted, the abutment stem (41, 51, 61) lies with a base surface on a bottom surface (45) in the receiving opening (11, 21, 31).

3. Tooth replacement system (1, 2, 3) according to one of Claims 1 to 2, **characterized in that**, when the abutment (40, 50, 60) is inserted, the head area of the abutment is spaced apart from a distal shoulder surface of the implant (10, 20, 30).

4. Tooth replacement system (1, 2, 3) according to Claim 1, **characterized in that** the drainage channel (49) is formed by a flattening of the abutment stem (41, 51, 61).

5. Tooth replacement system (1, 2, 3) according to Claim 4, **characterized in that** the drainage channel (49) has a cross section in the shape of a sector of a circle which is between 10 µm and 250 µm, preferably between 50 and 150 µm deep.

6. Tooth replacement system (1, 2, 3) according to one of Claims 1 to 4, **characterized in that** the implant (10, 20, 30) and/or abutment (40, 50, 60) are made from titanium or ceramic.

7. Tooth replacement system (1, 2, 3) according to Claim 6, **characterized in that** the ceramic implant (10, 20, 30) and/or the ceramic abutment (40, 50, 60) are made from zirconium oxide or a zirconium oxide/aluminium mixture.

8. Tooth replacement system (1, 2, 3) according to one of the preceding claims, **characterized in that** the inserted abutment (40, 50, 60) can be positioned in at least two radial angle positions by the form-fit interaction of locking means, on a proximal abutment base, and of at least one inner wall of the proximal portion of the receiving opening (11, 21, 31).

## Revendications

1. Système de remplacement dentaire (1, 2, 3) comprenant un implant (10, 20, 30) pour l'ostéointégration dans un os de mâchoire et un aboutement (40, 50, 60), une tige d'aboutement (41, 51, 61) comprenant un cylindre d'ajustement (42) pouvant être ajustée dans un ajustement serré cylindrique (14) correspondant d'une ouverture de réception (11, 21, 31) dans l'implant (10, 20, 30), l'aboutement (40, 50, 60) pouvant être collé dans l'ouverture de réception (11, 21, 31), **caractérisé en ce que** la tige d'aboutement cylindrique (41, 51, 61) est pourvue d'un canal de drainage périphérique (49) pour le drainage d'adhésif lors du collage de l'aboutement (40, 50, 60) dans l'implant (10, 20, 30).

2. Système de remplacement dentaire (1, 2, 3) selon la revendication 1, **caractérisé en ce qu'**une fois l'aboutement (40, 50, 60) introduit, la tige d'aboutement (41, 51, 61) repose avec une surface basale sur une surface de fond (45) dans l'ouverture de réception (11, 21, 31).

3. Système de remplacement dentaire (1, 2, 3) selon l'une quelconque des revendications 1 à 2, **caractérisé en ce qu'**une fois l'aboutement (40, 50, 60) introduit, la région de la tête de l'aboutement est espacée d'une surface d'épaulement distale de l'implant (10, 20, 30).

4. Système de remplacement dentaire (1, 2, 3) selon la revendication 1, **caractérisé en ce que** le canal de drainage (49) est formé par un aplatissement de la tige d'aboutement (41, 51, 61).

5. Système de remplacement dentaire (1, 2, 3) selon la revendication 4, **caractérisé en ce que** le canal de drainage (49) présente une section transversale en forme de secteur de cercle, qui a une profondeur comprise entre 10 µm et 250 µm, de préférence entre 50 et 150 µm.

6. Système de remplacement dentaire (1, 2, 3) selon l'une quelconque des revendications 1 à 4, **caractérisé en ce que** l'implant (10, 20, 30) et/ou l'aboutement (40, 50, 60) sont fabriqués en titane ou en céramique.

7. Système de remplacement dentaire (1, 2, 3) selon la revendication 6, **caractérisé en ce que** l'implant céramique (10, 20, 30) et/ou l'aboutement céramique (40, 50, 60) sont fabriqués en oxyde de zirconium ou en un mélange d'oxyde de zirconium et d'aluminium.

8. Système de remplacement dentaire (1, 2, 3) selon l'une quelconque des revendications précédentes, **caractérisé en ce que** l'aboutement inséré (40, 50, 60) peut être positionné dans au moins deux positions angulaires radiales par la coopération par engagement positif de moyens de blocage sur une base d'aboutement proximale et au moins une paroi intérieure de la portion proximale de l'ouverture de réception (11, 21, 31).
